## Europäisches Patentamt
## European Patent Office
## Office européen des brevets

(19)

(11) Veröffentlichungsnummer: **0 394 675 B1**

# EUROPÄISCHE PATENTSCHRIFT

(12)

(45) Veröffentlichungstag der Patentschrift:
27.12.91 Patentblatt 91/52

(51) Int. Cl.⁵: **B60N 3/00**, B60R 27/00

(21) Anmeldenummer: **90105487.4**

(22) Anmeldetag: **23.03.90**

(54) Windschutz für ein Cabriolet.

(30) Priorität: 28.04.89 DE 3914036

(43) Veröffentlichungstag der Anmeldung:
31.10.90 Patentblatt 90/44

(45) Bekanntmachung des Hinweises auf die
Patenterteilung:
27.12.91 Patentblatt 91/52

(84) Benannte Vertragsstaaten:
ES FR GB IT

(56) Entgegenhaltungen:
EP-A- 0 233 777
EP-A- 0 316 749
DE-C- 3 732 562

(73) Patentinhaber: DAIMLER-BENZ
AKTIENGESELLSCHAFT
Mercedesstrasse 136
W-7000 Stuttgart 60 (DE)

(72) Erfinder: Götz, Hans, Dipl.-Ing.
Dahlienstrasse 35
W-7030 Böblingen (DE)
Erfinder: Baumann, Karl-Heinz, Dipl.-Ing. (FH)
Brühlstrasse 3
W-7048 Bondorf (DE)

## Beschreibung

Die Erfindung betrifft einen Windschutz für ein Cabriolet mit einem um eine Fahrzeugquerachse in eine etwa horizontale Ruhestellung schwenkbaren, etwa U-förmigen Überrollbügel, wobei der Windschutz einen hinter eine vordere Sitzreihe hochschwenkbaren ersten Teil und einen den Raum hinter der Sitzreihe horizontal etwa auf Höhe der Grütellinie des Fahrzeugs abdeckenden zweiten Teil aufweist und beide Teile schwenkbar miteinander verbunden sind.

Der vorliegenden Erfindung lag die Aufgabe zugrunde, einen derartigen Windschutz so weiterzubilden, daß er leicht und schnell am Fahrzeug zu befestigen und von diesem wieder zu entfernen ist, ohne daß dazu am Fahrzeug selbst irgendwelche Vorkehrungen, wie z.B. das Anordnen spezieller Haltevorrichtungen zu treffen wären.

Diese Aufgabe wird bei einem gattungsgemäßen Windschutz erfindungsgemäß dadurch gelöst, daß der zweite Teil über Befestigungsmittel am Überrollbügel festlegbar und mit diesem zusammen hochschwenkbar ist.

Nach einer bevorzugten Ausführungsform der Erfindung ist dabei die Außenkontur des zweiten Teils des Windschutzes in ihrem Verlauf der Innenkontur des Überrollbügels angepaßt.

Weitere vorteilhafte Ausgestaltungen der Erfindung sind den weiteren Patentansprüchen zu entnehmen.

Der Gegenstand der Erfindung soll im folgenden anhand eines in der Zeichnung dargestellten Ausführungsbeispiels näher erläutert werden. In der Zeichnung zeigen :

Figur 1    eine perspektivische Darstellung eines am Fahrzeug montierten Windschutzes, dessen erster Teil in seine Wirkstellung hochgeschwenkt ist, und

Figur 2    den Windschutz in einer noch nicht montierten Darstellung.

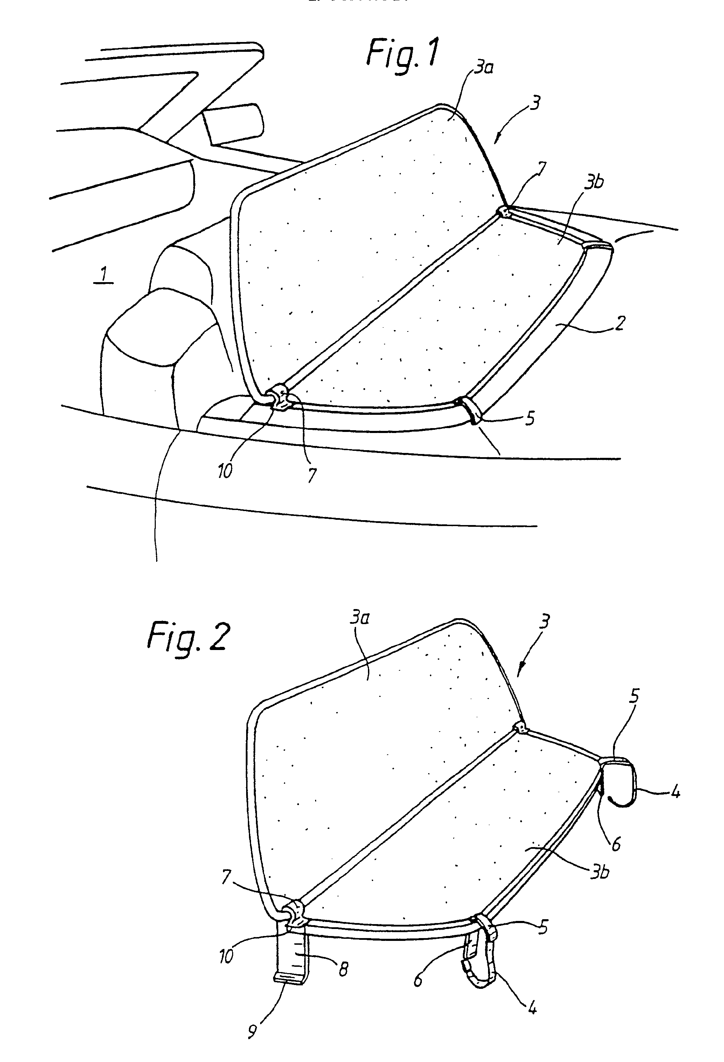

Das in Figur 1 der Zeichnung angedeutete Cabriolet 1 weist einen um eine Fahrzeugquerachse schwenkbaren Überrollbügel 2 auf, der hier in seiner nach unten geschwenkten Ruhelage dargestellt ist.

Am Überrollbügel 2 ist der zweite Teil 3b eines Windschutzes 3 befestigt, dessen erster Teil 3a in seiner hochgeschwenkten Wirkstellung gezeigt ist. Die Teile 3a und 3b des Windschutzes 3 bestehen im dargestellten Ausführungsbeispiel jeweils aus einem mit einem Netz bespannten Rahmen.

Die am zweiten Teil 3b des Windschutzes 3 angeordneten Befestigungsmittel zum Verbinden desselben mit dem Überrollbügel 2 sind in Figur 2 der Zeichnung näher dargestellt.

So weist der zweite Teil 3b des Windschutzes 3 Spannbänder 4 auf, die an starr davon abragenden, sich oben auf dem in Ruhestellung befindlichen Überrollbügel 2 abstützenden Armen 5 befestigt sind und die mit weiteren, nach unten weisenden Armen 6, die sich an der Innenkontur des Überrollbügels abstützen, nach Art von handelsüblichen Kofferspannbändern lösbar verrastbar sind.

Weiterhin trägt der zweite Teil 3b des Windschutzes 3 in seinen Eckbereichen Schwenklager 7 zur Befestigung des ersten Teils 3a, und vom Bereich der Schwenklager 7 ragen sich an der Innenkontur des Überrollbügels 2 abstützende Stützteile 8 ab, die an ihren freien Enden jeweils einen abgewinkelten Bereich 9 zum untergreifen des Überrollbügels 2 aufweisen.

Außerdem weisen die Schwenklager 7 jeweils einen seitlich herausgeführten Basisbereich 10 zum Abstützen auf der Oberseite des Überrollbügels 2 auf.

## Patentansprüche

1. Windschutz (3) für ein Cabriolet mit einem um eine Fahrzeugquerachse in eine etwa horizontale Ruhestellung schwenkbaren, etwa U-förmigen Überrollbügel (2), wobei der Windschutz (3) einen hinter eine vordere Sitzreihe hochschwenkbaren ersten Teil (3a) und einen den Raum hinter der Sitzreihe horizontal etwa auf Höhe der Gürtellinie des Fahrzeugs abdeckenden zweiten Teil (3b) aufweist und beide Teile schwenkbar miteinander verbunden sind, **dadurch gekennzeichnet,** daß der zweite Teil (3b) über Befestigungsmittel am Überrollbügel (2) festlegbar und mit diesem zusammen hochschwenkbar ist.

2. Windschutz nach Anspruch 1, **dadurch gekennzeichnet,** daß die Außenkontur des zweiten Teils (3b) des Windschutzes (3) in ihrem Verlauf der Innenkontur des Überrollbügels (2) angepaßt ist.

3. Windschutz nach Anspruch 1, **dadurch gekennzeichnet,** daß als Befestigungsmittel den Überrollbügel (2) umgreifende Spannbänder (4) vorgesehen sind.

4. Windschutz nach Anspruch 3, **dadurch gekennzeichnet,** daß die Spannbänder (4) an starr vom zweiten Teil (3b) des Windschutzes (3) abragenden, sich oben auf dem in Ruhestellung befindlichen Überrollbügel (2) abstützenden Armen (5) befestigt sind.

EP 0 394 675 B1

5. Windschutz nach den Ansprüchen 3 und 4, **dadurch gekennzeichnet,** daß die Spannbänder (4) mit weiteren, nach unten weisenden Armen (6), die sich an der Innenkontur des Überrollbügels (2) abstützen, lösbar verrastbar sind.

6. Windschutz nach einem oder mehreren der vorhergehenden Ansprüche, **dadurch gekennzeichnet,** daß der zweite Teil (3b) des Windschutzes (3) in seinen Eckbereichen Schwenklager (7) zur Befestigung des ersten Teils (3a) trägt, und daß vom Bereich der Schwenklager (7) sich an der Innenkontur des Überrollbügels (2) abstützende Stützteile (8) abragen, die an ihrem freien Ende jeweils einen abgewinkelten Bereich (9) zum Untergreifen des Überrollbügels (2) aufweisen.

7. Windschutz nach einem oder mehreren der vorhergehenden Ansprüche, **dadurch gekennzeichnet,** daß die Schwenklager eine Rastvorrichtung, z.B. einen Kugelschnäpper, für den ersten Teil des Windschutzes (3) aufweisen.

8. Windschutz nach einem oder mehreren der vorhergehenden Ansprüche, **dadurch gekennzeichnet,** daß die Schwenklager (7) jeweils einen seitlich herausgeführten Basisbereich (10) zur Abstützung auf der Oberseite des Überrollbügels (2) aufweisen.

## Claims

1. A windshield (3) for a convertible car with a substantially channel-shaped roll-over bar (21) swivellable around a transversal axis of the vehicle into a substantially horizontal rest position, the windshield (3) having a first part (3a) swivellable upwards behind a first row of seats, and a second part (3b) covering the space behind the row of seats horizontally substantially at the level of the waistline of the vehicle, and the two parts being swivellably connected together, characterized in that the second part (3b) can be laid by means of securing devices on the roll-over bar (2) and is upwardly-swivellable together with the latter.

2. A windshield according to claim 1, characterized in that the outer outline of the second part (3b) of the windshield (3) matches the inner outline of the roll-over bar (2).

3. A windshield according to claim 1, characterized in that tensioning straps (4) surrounding the roll-over bar (2) are provided as securing means.

4. A windshield according to claim 3, characterized in that the tensioning straps (4) are secured on arms (5) rigidly protruding from the second part (3b) of the windshield (3), and acting at the top on the roll-over bar (2) situated in the rest position.

5. A windshield according to claims 3 and 4, characterized in that tensioning straps (4) are detachably engageable with further downwardly-directed arms (6) witch act on the inner outline of the roll-over bar (2).

6. A windshield according to one or more of the foregoing claims, characterized in that the second part (3b) of the windshield (3) carries in its corner areas pivot bearings (7) for securing the first part (3a), and in that, from the area of the pivot bearings (7), supporting parts (8), acting on the inner outline of the roll-over bar (2) protrude, having at their free ends respectively one downwardly-bent area (9) for gripping the roll-over bar (2) from below.

7. A windshield according to one or more of the foregoing claims, characterized in that the pivot bearings have a locking device, e.g. a ball catch, for the first part of the windshield (3).

8. A windshield according to one or more of the foregoing claims, characterized in that the pivot bearings (7) have respectively a laterally protruding base area (10) for support on the upper side of the roll-over bar (2).

## Revendications

1. Pare-vent (3) pour un cabriolet, le cabriolet présentant un arceau de capotage (2), approximativement en U, qui peut être amené par pivotement autour d'un axe transversal du véhicule dans une position de repos approximativement horizontale, et le pare-vent (3) présentant une première partie (3a) qui peut être relevée par pivotement derrière une rangée avant de siège, et une seconde partie (3b) qui recouvre horizontalement l'espace situé derrière la rangée de siège, approximativement à hauteur de la ligne de ceinture du véhicule, les deux parties étant mutuellement assemblées en pivotement, **caractérisé** en ce que la seconde partie (3b) peut être fixée à l'aide de moyens de fixation sur l'arceau de capotage (2), et peut être relevée par pivotement conjointement avec lui.

2. Pare-vent selon la revendication 1, caractérisé en ce que le contour extérieur de la seconde partie (3b) du pare-vent (3) présente une allure adaptée à celle du contour intérieur de l'arceau de capotage (2).

3. Pare-vent selon la revendication 1, caractérisé en ce que des bandes de serrage (4), s'engageant autour de l'arceau de capotage (2), sont prévues comme moyens de sécurité.

3

4. Pare-vent selon la revendication 3, caractérisé en ce que les bandes de serrage (4) sont fixées sur des bras (5), qui partent rigidement en saillie de la seconde partie (3b) du pare-vent (3) et s'appuient sur le dessus de l'arceau de capotage (2) se trouvant en position de repos.

5. Pare-vent selon les revendications 3 et 4, caractérisé en ce que les bandes de serrage (4) peuvent être enclenchées de manière amovible sur d'autres bras (6), dirigés vers le bas, qui s'appuient contre le contour intérieur de l'arceau de capotage (2).

6. Pare-vent selon l'une quelconque des revendications précédentes, caractérisé en ce que la seconde partie (3b) du pare-vent (3) porte, dans ses régions de coins, des paliers de pivotement (7) pour la fixation de la première partie (3a), et en ce que des éléments de soutien (8) partent en saillie vers le bas depuis la région des paliers de pivotement (7), éléments qui s'appuient contre le contour intérieur de l'arceau de capotage (2) et présentent chacun, à leur extrémité libre, une région coudée (9) pour s'engager sous l'arceau de capotage (2).

7. Pare-vent selon l'une quelconque des revendications précédentes, caractérisé en ce que les paliers de pivotement présentent un dispositif d'encliquetage, par exemple un loqueteau sphérique, pour la première partie du pare-vent (3).

8. Pare-vent selon l'une quelconque des revendications précédentes, caractérisé en ce que les paliers de pivotement (7) présentent chacun une région de base (10) dépassant latéralement vers l'extérieur, pour s'appuyer sur le dessus de l'arceau de capotage (2).

*Fig.1*

*Fig.2*